# EUROPEAN PATENT SPECIFICATION

(11) **EP 0 826 635 B1**
(45) Date of publication and mention of the grant of the patent: **29.12.1999**
(21) Application number: 97114574.3
(22) Date of filing: 22.08.1997
(51) Int. Cl.: C01G 49/08

(54) **Magnetite particles and production process of the same**
Magnetitteilchen und Verfahren zu ihrer Herstellung
Particules de magnétite et leur procédé de préparation

(30) Priority: 30.08.1996 JP 24694596
(43) Date of publication of application: 04.03.1998
(73) Proprietor: MITSUI MINING & SMELTING CO., LTD., Tokyo (JP)
(72) Inventor: Miwa, Masahiro, Tamano-shi, Okayama (JP); Miyazono, Takeshi, Tamano-shi, Okayama (JP); Hashiuchi, Masachika, Tamano-shi, Okayama (JP)
(74) Representative: Modiano, Guido, Dr.-Ing.

(56) References cited:
- EP-A- 0 423 743
- EP-A- 0 532 315
- EP-A- 0 533 069
- EP-A- 0 566 790
- DE-A- 19 627 011
- DATABASE WPI Section Ch, Week 9107 Derwent Publications Ltd., London, GB; Class G08, AN 91-048307 XP002049441 & JP 03 001 160 A (CANON KK) , 7 January 1991
- DATABASE WPI Section Ch, Week 9313 Derwent Publications Ltd., London, GB; Class G01, AN 93-104010 XP002049442 & JP 05 043 253 A (KANTO DENKA KOGYO KK) , 23 February 1993

## Description

The present invention relates to magnetite particles and a production process of the same, and more specifically to magnetite particles having an average particle size of not more than 0.6 µm, a coercive force of 40 to 100 Oe (3.18 to 7.96 kA/m) at 10 kOe and electrical resistance of not less than 1 x 10⁴ Ω·cm in a particle shape of an octahedron and presenting a black color, which is particularly used as a use for an electrostatic copying magnetic toner magnetic powder and a paint black pigment powder, and a production process of the same.

### 2. Description of the prior Art

Recently, as a magnetic toner material for a dry-type electronic copying machine, a printer or the like, magnetite particles which are obtained by the aqueous solution reaction process have widely been used. Various types of general development properties required for a magnetic toner. However, with the development of the electrophotographic technology, a copying machine or a printer using a digital technology has rapidly been developed, and the prescribed properties has become higher. That is, a conventional character as well as the output of the photograph paper or photograph or the like are required. In particular, among the printers, a printer having an ability of 600 dots or more per inch has appeared so that a latent image on a photoreceptor becomes further precise. Accordingly, a high fine-line reproducibility in the development is strongly demanded. However, the Japanese Patent Application Laid-Open Gazette (Kokai) No. Hei 3-1160, describes that toners are dispersed in the periphery of an image in a case where the coercive force of the magnetic powder exceeds 100 Oe, and that for this reason, it is difficult to respond to a demand for a higher reproducibility of a mesh point or fine line. Further, it seems that the powder having a higher electrical resistance is better in order to stabilize the charging of toner particles in a proper amount thereof. Such description is described therein.

Further, the Japanese Patent Application Laid-Open Gazette (Kokai) No. Hei 5-72801, describes a toner which contains silicon and magnetic powders having electrical resistance of 1 x 10⁴ Ω·cm or more.

In all of these above-mentioned publications, spherical magnetite particles are used. Magnetite particles, which satisfy a coercive force of 100 Oe or less, are approximately spherical while depending on the particle diameter. It is known that magnetite particles having a particle shape of, for example, an octahedron, have a coercive force of above 100 Oe, in an average particle diameter of not more than 0.6 µm. The electrical resistance in magnetite particles is usually 10² to 10³ Ω·cm.

### SUMMARY OF THE INVENTION

Accordingly, it is an object of the present invention is to remove such conventional problems and provide magnetite particles with improved dispersibility, having an average particle diameter of a predetermined level or less, a coercive force of 100 Oe or less in a particle shape of an octahedron, and electrical resistance of not less than 1 x 10⁴ Ω·cm, and further provide a production process of the magnetite particles.

The present inventors have tried to strain the lattice of the magnetite crystal by allowing silicon to contain inside octahedron-shaped magnetite particles.

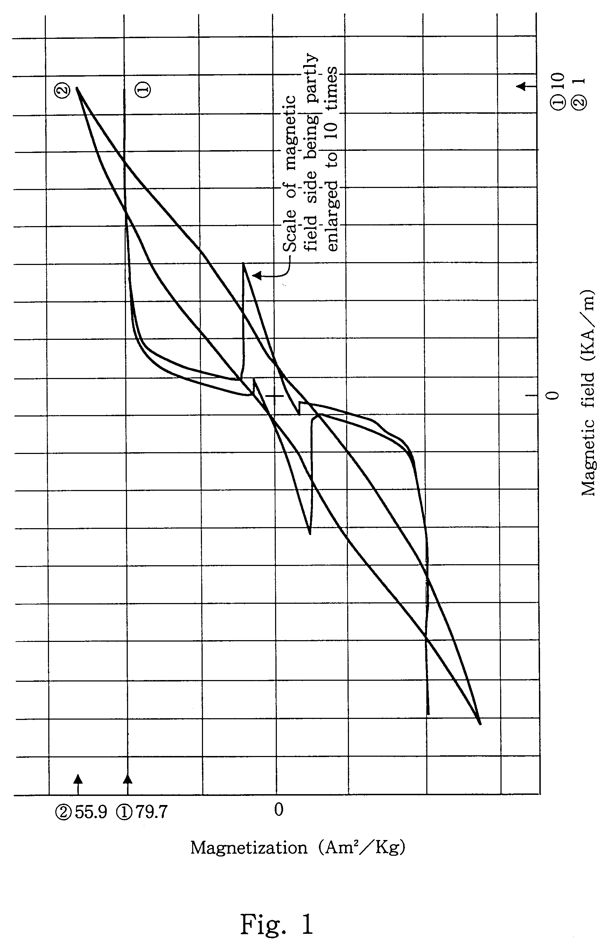

The B-H hysteresis loop of the silicon contained magnetite particles therein is characteristically bent as shown in Fig. 1. It seemed that the bending of this B-H hysteresis loop is derived from a magnetic anisotropy based on the crystal lattice strain. Thus, we have found that when relaxation of the lattice strain by heat treatment is evaluated, the particle coercive force is decreased.

Each of the magnetite particles according to the present invention has an octahedron shape. The octahedron-shaped magnetite particles are advantageous in that they have larger stable regions than the spherical-shaped ones, so that the former is more easily produced than the latter in the production process, and that the distribution of the particle size of the octahedron-shaped magnetite particle is sharp.

The magnetite particles according to the present invention are characterized in that the particle shape is octahedron, the average particle diameter is not more than 0.6 µm, the coercive force is 40 to 100 Oe (3.18 to 7.96 kA/m) at 10 kOe, and the electrical resistance is not less than 1 x 10⁴ Ω·cm.

While the novel features of the present invention are set forth particularly in the appended claims, the invention will be better understood and appreciated, along with other objects and features thereof, from the following detailed description taken in conjunction with the attached drawing.

### BRIEF DESCRIPTION OF THE DRAWING

Fig. 1 is a view showing a hysteresis loop (the external magnetic fields of 1 kOe and 10 kOe) of magnetite particles described in Example 1.

### PREFERRED EMBODIMENTS OF THE INVENTION

The average particle diameter of the magnetite particles according to the present invention is not more than 0.6 µm, preferably 0.1 to 0.6 µm. When the average particle diameter is too small, the magnetite particles tend to agglomerate and the environment resistance of the particles is deteriorated. Further, the degree of black color is also deteriorated as the hue thereof. Furthermore, in such case, the magnetite particles has superparamagnetism, whereby the coercive force as well as the saturation magnetism are decreased. In a case where the average particle diameter is too large, when the magnetite particles dispersed into the toner are used, it is excessively stuck out of the surface of the toner or the deviation of the particle occurs, which is undesirable. In other words, since the magnetite particles have a single magnetic domain structure in the average particle diameter of about not more than 0.18 µm, the coercive force of the magnetite particle becomes large. However, when the magnetite particles have a smaller average particle diameter than the above-mentioned one, magnetite particles which present the superparamagnetism is increased (DENKI KAGAKU (Japan), Vol. 37, p 330 by Takada).

When the coercive force exceeds 100 Oe, toners are dispersed in the periphery of an image as mentioned-above, and for this reason, it is difficult to respond to a demand for a higher reproducibility of a mesh point or fine line. Further, it is substantially difficult to produce magnetite particles having a coercive force of less than 40 Oe.

Further, if the electrical resistance of the magnetite particles is 10³ order or less, it is often difficult to maintain the charging stability in the toners.

Further, the magnetite particles according to the present invention is characterized in that they contain silicon of 0.1 to 3.0% by weight, with respect to the magnetite particles, and a total 0.5 to 4.5% by weight of components of Si, Al, Ti, Zr, Mn, Mg and Zn other than Fe in the time when the Fe is dissolved by 20% from the surface of the particles, with respect to the magnetite particles.

If the silicon contents are less than 0.1% by weight, a coercive force within the above-mentioned range cannot be obtained. On the other hand, if the silicon contents are over 3.0% by weight, much silicon is often exposed on the surface of the magnetite particles, whereby the working properties become bad.

Further, if the total contents of components of Si, Al, Ti, Zr, Mn, Mg and Zn other than Fe in the time when the Fe is dissolved by 20% from the surface of the particles, are less than 0.5% by weight with respect to the magnetite particles, effects on the increase in the electrical resistance are small. On the other hand, the total contents thereof are over 4.5% by weight, the saturation magnetism is undesirably decreased.

Next, a production process of the magnetite particles according to the present invention will be described.

The production process of the magnetite particles according to the present invention comprises the steps of mixing a ferrous salt aqueous solution with a silicate aqueous solution to obtain an aqueous mixture solution, oxidizing at not less than pH 10 after mixing the aqueous mixture solution with an alkaline aqueous solution to obtain a slurry, adding an aqueous solution containing at least one component selected from the group consisting of Si, Al, Ti, Zr, Mn, Mg, Zn and Fe into the slurry when the oxidation reaction is progressed by 80% or more, to prepare the mixture so that it exhibits pH 5 or more, further oxidizing the mixture to obtain an oxidized slurry containing magnetite particles, and heat treating the magnetite particles after filtrating, washing, drying and grinding the thus obtained slurry, so that the contents of FeO within the magnetite particles obtained by oxidation is 18% by weight or more.

According to the present invention, a ferrous salt aqueous solution is mixed with a silicate aqueous solution. As the ferrous salt aqueous solution, a ferrous sulfate aqueous solution or the like may be given. The concentration and amount of the silicate aqueous solution are prepared so that silicon of 0.1 to 3.0% by weight is contained with respect to a finally obtained magnetite particles.

After that, the mixed solution of this ferrous salt aqueous solution and the silicate aqueous solution is mixed with an alkaline aqueous solution to form iron hydroxide slurry and an oxygen containing gas, preferably the air is blown into to carry out the oxidation reaction at a temperature of 60 to 100°C, preferably, 80 to 90°C.

An aqueous solution which contains at least one of components consisting of Si, Al, Ti, Zr, Mn, Mg, Zn and Fe is poured into slurry when the oxidation reaction is progressed by 80% or more, that is, by 80 to 100%, and the oxidation is repeated.

As the selected components in this process, even an acid type, such as sulfuric acid, or an alkaline type can be used. Further, even a simultaneous addition of the selected components or separated addition thereof to the slurry may be carried out.

After the oxidation reaction is completed, each of processes of washing, filtration, drying and grinding is carried out to obtain magnetite particles. This drying process means that the moisture within the cake is evaporated at a temperature of below 100°C and then, a loss of the moisture within the powder reaches 0.5% or less at a temperature of 100°C for an hour.

After that, according to the present invention, this magnetite particles are heat treated. As the atmosphere of the heat treatment, any of an oxidizing atmosphere such as the air or the like and an inert atmosphere such as the nitrogen or the like can be used. Further, although various heat treatment temperatures are used in accordance with the magnetite particle size or time, when the heat treatment is carried out in an oxidizing atmosphere, the heat temperature may be set so that FeO within the magnetite particles is not less than 18% by weight. Nevertheless, when the heat treatment is carried out at a low temperature, the heat treatment time becomes long, and on the other hand, when the heat treatment is carried out at a high temperature, the heat treatment time becomes short. However, the short time treatment is industrially difficult. Thus, it is preferable that the heat treatment temperature of the magnetite particles is 100 to 300°C. On the other hand, when the heat treatment is carried out in an inert atmosphere, a heat treatment process may be selected so that the heat treatment can be carried out at below the sintering temperature of the magnetite particle for a suitable time. The coercive force of the magnetite particles is further decreased by 10% or more in comparison with the coercive force of a dried, non-heated magnetite particle by this heat treatment.

It is necessary to prevent the deterioration of the degree of a black color in the heat treatment of the magnetite particle by setting the temperature and the time so that FeO within the magnetite particle is 18% or more. It has conventionally been recognized that when the magnetite particles are gradually oxidized Fe²⁺ ions within Fe₃O₄ particles are then oxidized, so that the color of the magnetite particle is gradually changed from black to brown with the result that the coercive force thereof is increased in the approximate composition of FeO = 10%. This phenomenon is explained by the fact that a part of Fe₃O₄ particles is changed to a γ - Fe₂O₃ intermediate oxide film.

The present inventors have assumed that since the coercive force of the magnetite particles was decreased regardless of an oxidizing or an inert heat treatment atmosphere, the decrease in the coercive force thereof is derived from heat relaxation of the lattice strain. Further, the B-H hysteresis loop of heat treated magnetite particles tended to be slightly curved.

Furthermore, when the heat treatment is carried out, the saturation magnetization (δₛ) tended to increase particularly in the external magnetic field of 1 kOe. It seems that this is because the magnetic anisotropy which is mainly based on the lattice strain is improved to thereby enhance the magnetic permeability by the heat treatment.

The reasons why an electrical resistance of powders is increased by allowing at least one of components consisting of Si, Al, Ti, Zr, Mn, Mg and Zn to contain into the surface layer thereof cannot be understood. However, the present inventors have found that the increase in electrical resistance is effected by forming an iron oxide layer containing the selected components on the surface of the powders in the presence of non-reacted Fe rather than treating only the selected components thereon.

As described previously and apparent from the following disclosure, in accordance with the present invention, it is possible to obtain magnetite particles having an average particle diameter of not more than 0.6 µm in a particle shape of an octahedron, a coercive force of 40 to 100 Oe (3.18 to 7.96 kA/m) at 10 kOe, and electrical resistance of not less than 1 x 10⁴ Ω·cm, by allowing silicon to contain into the magnetite particles, improving the surface of the particles with the selected components, and performing a heat treatment. Accordingly, the magnetite particles according to the present invention have such features that they are well dispersed into toners, with the result that they are preferably used for particularly, electrostatic copying magnetic toners.

In the following paragraphs, the present invention will be described in more detail by way of examples with reference to the attached drawing.

### Example 1

As shown in Table 1, 48 l of ferrous sulfate aqueous solution containing 1.87 mol/l Fe²⁺ was mixed with 2 l of an aqueous solution containing 1.62 mol/l Si to obtain a mixture. After that, the thus obtained mixture was mixed with 50 l of 3.58 mol/l sodium hydroxide while stirring it, so that the mixture exhibits pH 10 or more, and 20 l/min of air was blown into the mixture while keeping the temperature at 90°C, and the reaction was allowed to complete. After that, 3 l of the respective aqueous solutions containing 0.84 mol/l Al and 2.09 mol/l Fe were added to the obtained mixture, and prepared so that it exhibits pH 5 or more. After that, reoxidation was completely carried out. The obtained particles were subjected to a usual washing, filtration, drying and grinding to thereby obtain magnetite particles.

As to the obtained magnetite particles, the particle diameter, the specific surface area, the magnetic properties, the electrical resistance and the dispersibility were evaluated by the following methods. The obtained results are shown in Table 2. The magnetic hysteresis loop (1 kOe, and 10 kOe of external magnetic fields) of the magnetite particles is shown in Fig. 1.

### (1) Particle diameter

Some of particle diameters on a picture were measured by using a transmission electron microscopic picture (30000 x magnification) of the particles and the average thereof was defined as a particle diameter

### (2) Specific surface area

2200 type BET meter produced by Shimazu-Micromerytics was used.

### (3) Magnetic properties

VSM-P7 type of vibration specimen type magnetometer produced by Touei kougyo was used.

### (4) Electrical resistance

After 10 g of a sample is placed in a holder, a pressure of 600 Kg/cm² is applied to the holder to mold into a 25 mmφ tablet sample. After that, an electrode is set on the sample, measurement is carried out while pressing it at a pressure of 150 Kg/cm². The respective values of electrical resistance of magnetite particles were obtained by calculating from the thickness, cross-sectional area and value of electrical resistance of the samples.

### (5) Dispersibility

After 1 g of magnetite and 0.7 g of linseed oil were mixed and kneaded, 4.5 g of clear lacquer was added to the mixture and further kneaded it. This mixture was applied on a glass plate by using an 4 mil applicator. After drying the applied mixture, reflectance at 60° were measured by the Murakami type GLOSS METER (GM-3M).

### (6) Analysis of surface layer

After 5 l of 1 N hydrochloric acid was poured into a 25 g sample to obtain a mixture, the mixture was stirred and dissolved at 50°C. The thus dissolved mixture solution was filtered by using a membrane filter having a pore size of 0.1 µm to obtain a filtrate. The thus obtained filtrate was analyzed and the analysis values of the components other than Fe at the time when 20% Fe was dissolved were calculated by percentage by weight in the magnetite respectively.

### Examples 2 to 7

As shown in Table 1, items other than the amount of added Si which is not reacted with other compositions, the addition time for the surface layer, the types of additives and the addition amount were used in the same manner as in Example 1, and magnetite particles were obtained. The obtained magnetite particles were evaluated by the same methods as in Example 1. The obtained results are shown in Table 2.

### Comparative Example 1

As shown in Table 1, the same manner as in Example 1 was carried out without adding silicon and surface components before the reaction, and magnetite particles were obtained. The obtained results were evaluated in the same manner as in Example 1. The results are shown in Table 2.

### Comparative Example 2

As shown in Table 1, the same manner as in Example 3 was carried out except for without adding silicon before the reaction, and magnetite particles were obtained. The obtained results were evaluated in the same manner as in Example 1. The results are shown in Table 2.

### Comparative Example 3

As shown in Table 1, the same manner as in Example 5 was carried out except for without adding surface components before the reaction, and magnetite particles were obtained. The obtained results were evaluated in the same manner as in Example 1. The results are shown in Table 2.

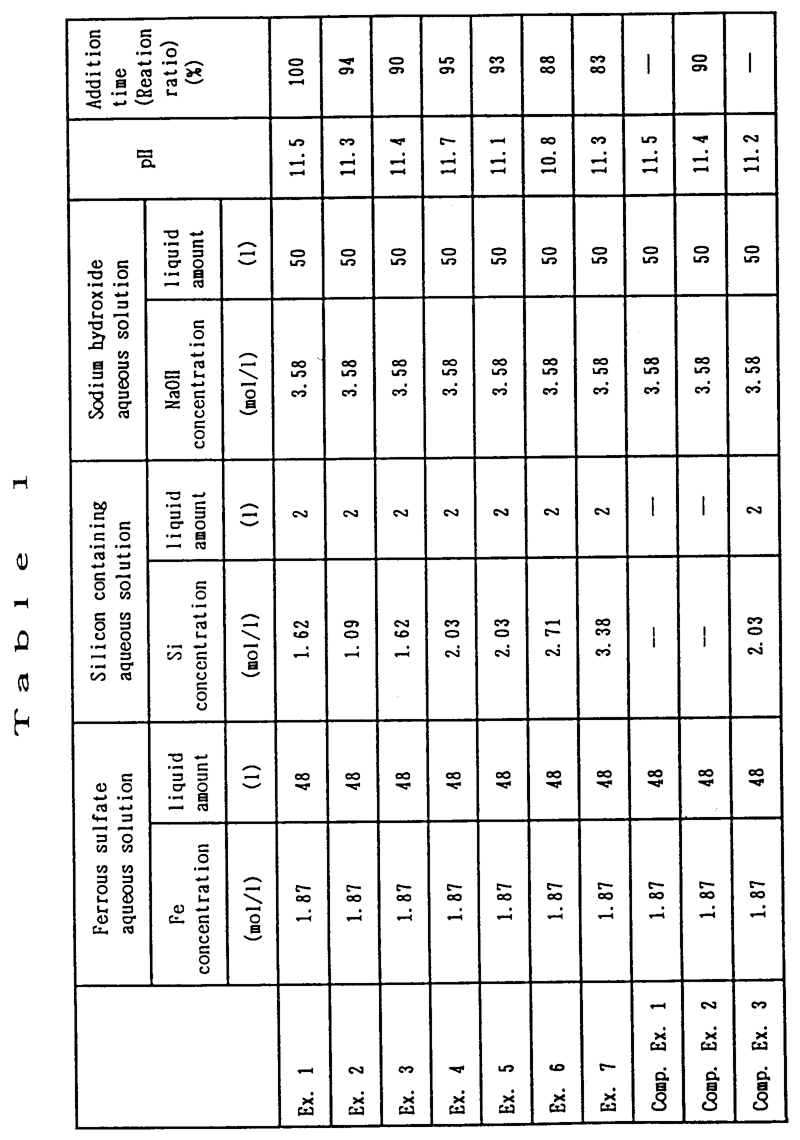

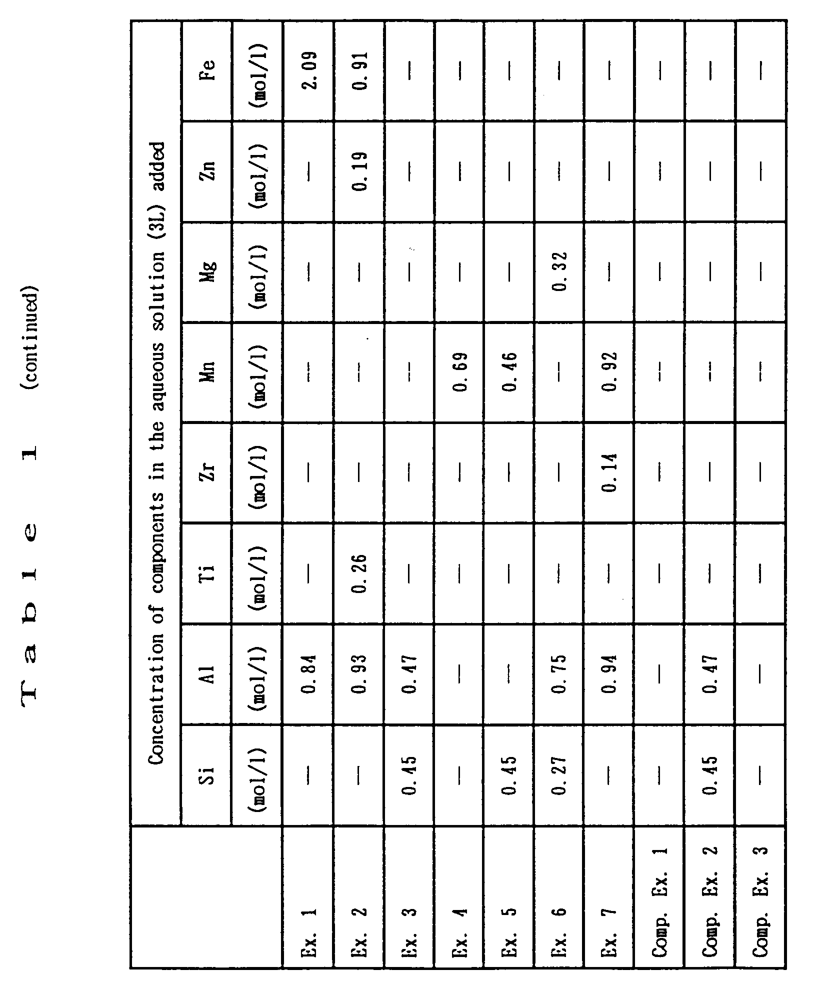

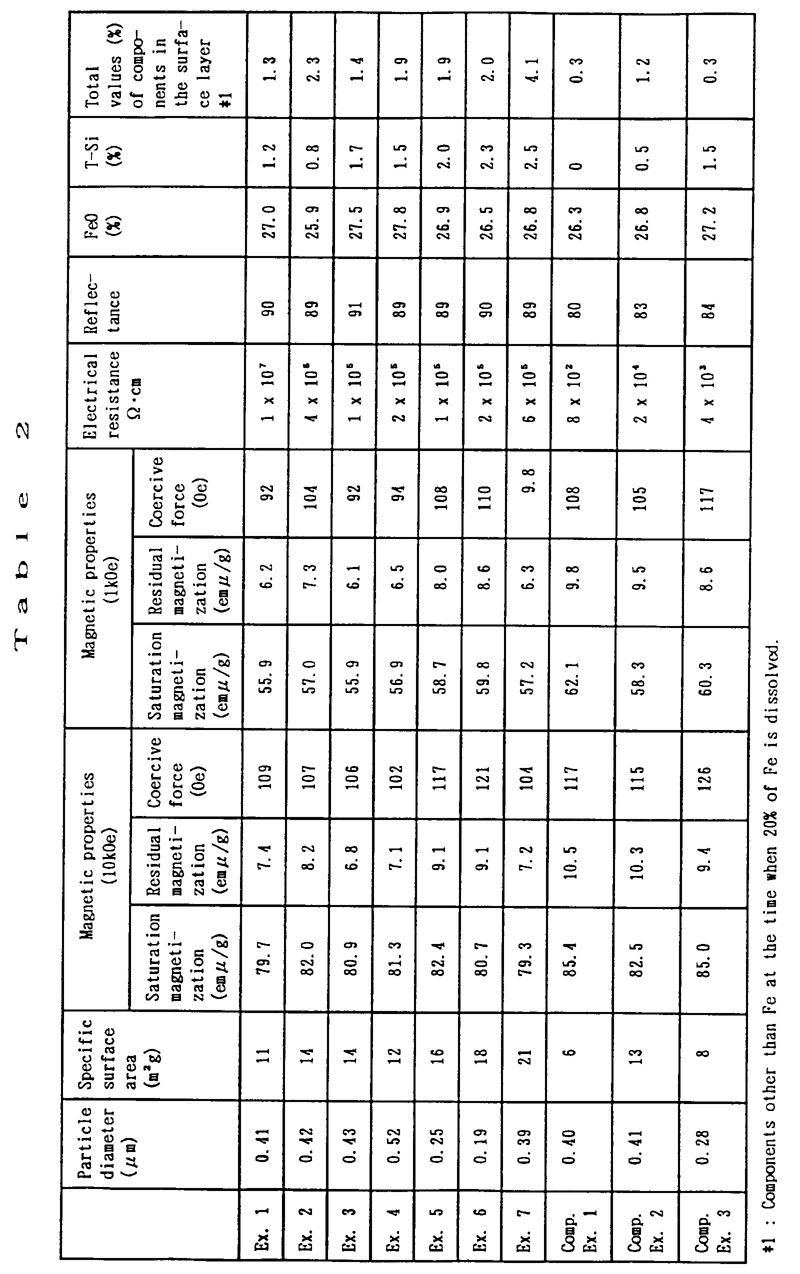

It has been appreciated from Examples 1 to 7 and Comparative Examples 1 to 3 that magnetite particles having an average particle diameter of not more than 0.6 µm has a coercive force of not less than 100 Oe.

As can be seen from Comparative Examples 1 and 3, the magnetite particles which have not added metals on a surface layer have the electrical resistance of less than 10⁴ Ω·cm. For Comparative Example 2, the value of the electrical resistance is 10⁴ Ω·cm order.

As can be seen from the results of reflectance, the magnetic particles that contain silicon therein and has a surface layer, have an improved dispersibility.

The respective particles were heat-treated by the following conditions.

### Examples 8 to 10

Samples of Examples 1, 3 and 5 were heated at 150 °C in the air to prepare FeO. As to the obtained magnetite particles, the magnetic property, electrical resistance and reflectance were evaluated. The evaluated results are shown in Table 3.

### Example 11

A sample of Example 1 was heated at 300 °C for 30 min. in a nitrogen atmosphere. As to the obtained magnetite particles, the magnetic property, electrical resistance and reflectance were evaluated. The evaluated results are shown in Table 3.

### Comparative Examples 4 to 6

Samples of Comparative Examples 1 to 3 were heated at 150 °C in the air to prepare FeO. As to the obtained magnetite particles, the magnetic property, electrical resistance and reflectance were evaluated. The evaluated results are shown in Table 3.

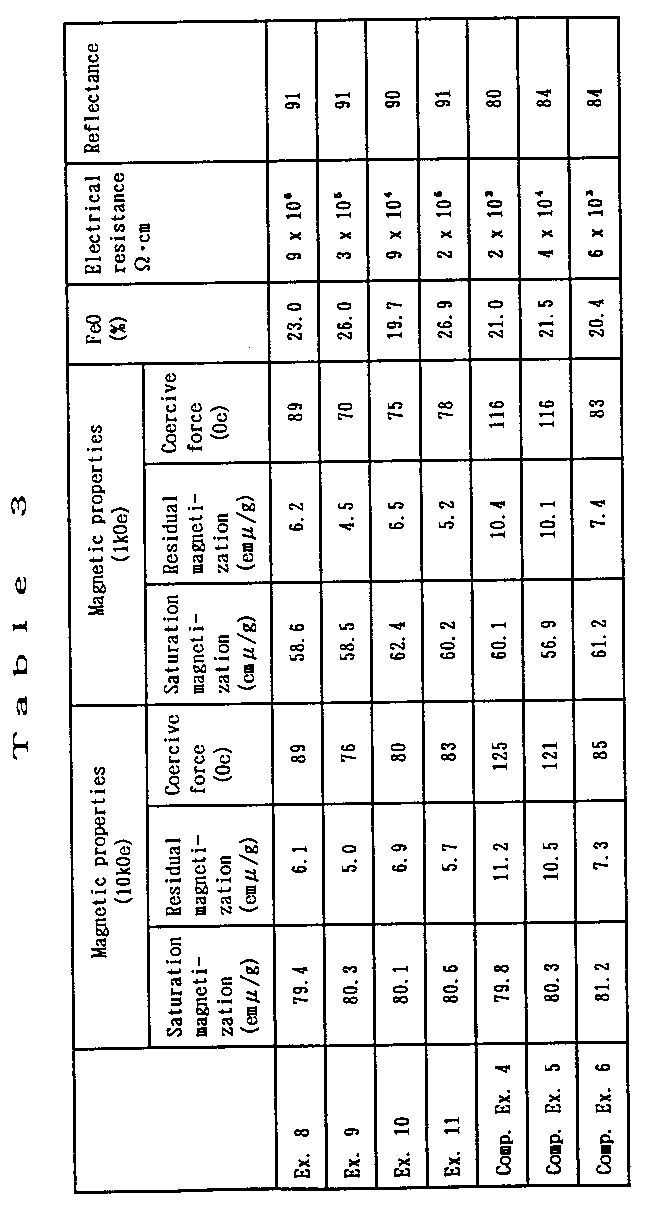

As can be seen from the results of Examples 8 to 11, the coercive force of the particles is reduced to be not more than 100 Oe by heat treatment. Although the electrical resistance is slightly reduced in the inert gas atmosphere, it does not change in the air so as to be 10⁴ Ω·cm order or more.

As can be seen from the results of Comparative Example 4, for a sample which does not contain silicon therein, the coercive force was increased by heat treatment.

As can also be seen from the results of Comparative Example 5, although the sample thereof has an electrical resistance of 10⁴ Ω·cm order, the coercive force was increased by heat treatment, as in Comparative Example 4, due to an improved surface layer.

Further, as can be seen from the results of Comparative Example 6, since the sample contains silicon therein, the coercive force is reduced by heat treatment. However, since the surface layer is not improved, the electrical resistance is low.

As can be seen from these results, coercive forces of all magnetite particles containing silicon therein, in which lattices of the magnetite particles are allowed to strain were decreased. On the other hand, coercive forces of most silicon-free magnetite particles were slightly increased. Further, by improving the surface layer, the electrical resistance was enhanced and the dispersibility had an improved tendency.

Further, for magnetite particles containing silicon therein, a saturation magnetization tended to increase at 1 KOe in the external magnetic field, by heat treatment.

The present invention may be embodied in other specific forms without departing from the spirit or essential characteristics thereof. The present embodiment is therefore to be considered in all respects as illustrative and not restrictive, the scope of the invention being indicated by the appended claims rather than by the foregoing description and all changes which come within meaning and range of equivalency of the claims are therefore intended to be embraced therein.

## Claims

1. Magnetite particles characterized in that the particle shape is octahedron, the average particle diameter is not more than 0.6 µm, the coercive force is 40 to 100 Oe at 10 kOe, and the electrical resistance is not less than 1 x 10⁴ Ω·cm.

2. Magnetite particles according to claim 1, wherein they contain silicon of 0.1 to 3.0% by weight, with respect to the magnetite particles, and a total 0.5 to 4.5% by weight of components of Si, Al, Ti, Zr, Mn, Mg and Zn other than Fe in the time when the Fe is dissolved by 20% from the surface of the particles, with respect to the magnetite particles.

3. A process for producing magnetite particles according to claims 1 and 2 comprising the steps of
mixing a ferrous salt aqueous solution with a silicate aqueous solution to obtain an aqueous mixture solution,
oxidizing at not less than pH 10 after mixing the aqueous mixture solution with an alkaline aqueous solution to obtain a slurry,
adding an aqueous solution containing at least one component selected from the group consisting of Si, Al, Ti, Zr, Mn, Mg, Zn and Fe into the slurry when the oxidation reaction is progressed by 80% or more, to prepare the mixture so that it exhibits pH 5 or more,
further oxidizing the mixture to obtain an oxidized slurry containing magnetite particles, and
heat treating magnetite particles after filtrating, washing, drying and grinding the thus obtained slurry, so that the contents of FeO within the magnetite particles obtained by oxidation is 18% by weight or more.

4. A process for producing magnetite particles according to claim 3, wherein said heat treatment atmosphere is an oxidizing atmosphere or an inert atmosphere.

## Patentansprüche

1. Magnetitpartikel, dadurch gekennzeichnet, daß die Partikelform die eines Oktaeders ist, daß der mittlere Partikeldurchmesser nicht größer als 0,6 µm ist, daß die Koerzitivkraft 40 bis 100 Oe bei 10 KOe beträgt und daß der elektrische Widerstand nicht geringer als 1 x 10⁴ Ω·cm ist.

2. Magnetitpartikel nach Anspruch 1, worin in Bezug auf die Magnetitpartikel Silizium mit einem Gewichtsanteil von 0,1 bis 3,0% enthalten ist, und zum Zeitpunkt, zu dem 20% des Fe von der Oberfläche der Partikel aufgelöst ist, in Bezug auf die Magnetitpartikel, andere Bestandteile als Fe, wie Si, Al, Ti, Zr, Mn, Mg und Zn als Fe mit einem Gesamtgewichtsanteil von 0,5 bis 4,5% enthalten sind.

3. Ein Verfahren zum Herstellen von Magnetitpartikeln nach den Ansprüchen 1 und 2, das folgende Schritte umfaßt:
Mischen einer wässrigen Eisen(II)-Salzlösung mit einer wässrigen Silikatlösung, um ein wässriges Lösungsgemisch zu erhalten;
Oxidieren bei einem pH-Wert der nicht weniger als 10 beträgt, nachdem das wässrige Lösungsgemisch mit einer wässrigen alkalischen Lösung vermischt wurde, um einen Brei zu erhalten;
Hinzufügen einer wässrigen Lösung in den Brei, die mindestens einen Bestandteil enthält, der aus der Gruppe ausgewählt ist, die aus Si, Al, Ti, Zr, Mn, Mg, Zn und Fe besteht, sobald die Oxidationsreaktion um 80% oder mehr fortgeschritten ist, um das Gemisch so verarbeiten, daß es einen pH-Wert von 5 oder mehr aufweist;
weiteres Oxidieren des Gemischs, um einen oxidierten Brei zu erhalten, der Magnetitpartikel enthält; und
Hitzebehandeln der Magnetitpartikel nach dem Filtrieren, Waschen, Trocknen und Zerkleinern des solchermaßen erhaltenen Breis, so daß der Gehalt an FeO innerhalb der über die Oxidation erhaltenen Magnetitpartikel 18% Gewichtsanteil oder mehr beträgt.

4. Ein Verfahren zum Herstellen der Magnetitpartikel nach Anspruch 3, worin die Hitzebehandlungsatmosphäre eine oxidierende Atmosphäre oder eine inerte Atmosphäre ist.

## Revendications

1. Particules de magnétite,
caractérisées en ce que la forme des particules est octaédrique, le diamètre moyen des particules n'est pas supérieur à 0,6 µm, la force coercitive est de 40 à 100 Oe à 10 kOe et la résistance électrique n'est pas inférieure à 1 x 10⁴ Ω cm.

2. Particules de magnétite selon la revendication 1,
dans lesquelles elles contiennent du silicium de 0,1 à 3,0% en poids, par rapport aux particules de magnétite, et un total de 0,5 à 4,5% en poids de composants Si, Al, Ti, Zr, Mn, Mg et Zn autre que Fe au moment où Fe est dissout de 20% à partir de la surface des particules par rapport aux particules de magnétite.

3. Procédé pour produire des particules de magnétite selon les revendications 1 et 2, comprenant les étapes de :
- mélanger une solution aqueuse de sel ferreux avec une solution aqueuse de silicate pour obtenir une solution aqueuse du mélange,
- oxyder à pas moins de pH 10 après mélange, la solution aqueuse du mélange avec une solution aqueuse alcaline pour obtenir une bouillie,
- ajouter une solution aqueuse contenant au moins un composant choisi à partir du groupe comprenant Si, Al, Ti, Zr, Mn, Mg, Zn et Fe dans la bouillie quand la réaction d'oxydation a progressé de 80% ou plus, pour préparer le mélange de sorte qu'il montre le pH 5 ou plus,
- oxyder encore le mélange pour obtenir une bouillie oxydée contenant des particules de magnétite, et
- traiter thermiquement les particules de magnétite après filtration, lavage, séchage et broyage de la bouillie ainsi obtenue, de sorte que la teneur en FeO dans les particules de magnétite obtenues par oxydation est de 18% en poids ou plus.

4. Procédé pour produire des particules de magnétite selon la revendication 3, dans lequel ladite atmosphère de traitement thermique est une atmosphère oxydante ou une atmosphère inerte.
